# EUROPEAN PATENT APPLICATION

(11) **EP 1 780 858 A1**
(43) Date of publication of application: **02.05.2007**
(21) Application number: 05405615.5
(22) Date of filing: 31.10.2005
(51) Int. Cl.: H02H 7/26, H02H 3/28, H02H 3/38

(54) **Arrangement and method for protecting an electric power system**

(71) Applicant: ABB Technology AG, 8050 Zürich (CH)
(72) Inventor: Bertsch, Joachim, 8802 Kilchberg (CH)
(74) Representative: ABB Patent Attorneys

(57) **Abstract**

The present invention is concerned with the protection of an electric power system (1) by means of protective relays (2, 2', 2") comprising each a phasor measurement facility (20) for measuring synchronized current and/or voltage phasor values at a location (11, 11', 11") of the respective protective relay (2, 2', 2") as well as a data communication module (21) for transmitting and/or receiving measured phasor values to and/or from other protective relays via a communication link (3). A system protection facility (23) for performing a plurality of protection functions (Line differential protection (LDP), Line thermal monitoring (LTM), Phase angle monitoring (PAM), Power Oscillation Monitoring (POM), Voltage stability monitoring (VSM)) based on synchronized phasor values measured at the locations (11", 11') of two distinct protective relays (2", 2') is integrated in one of the protective relays (2", 2').

## Description

### FIELD OF THE INVENTION

The invention relates to the field of protection and control of electric power systems. It departs from an arrangement for protecting an electric power system as described in the preamble of claim 1.

### BACKGROUND OF THE INVENTION

Electric power systems comprise power transmission networks interconnecting geographically separated regions, and substations for transforming voltages and for switching connections between individual lines of the network. Power generation and load flow in a system with several substations is managed by a central Energy Management System (EMS) and supervised by a Supervisory Control And Data Acquisition (SCADA) system. In the past years, continued load growth without a corresponding increase in transmission resources has resulted in reduced operational margins for many power systems world wide, and has led to operation of power systems ever closer to their stability limits. Likewise, load transmission and wheeling of power from distant generators to local load consumers has become common practice, and led to substantially increased amounts of power being transmitted through the existing networks, occasionally even causing transmission bottlenecks and electromechanical oscillations of parts of the electric power systems. These issues together with the on-going worldwide trend towards deregulation of the electric power markets on the one hand and the increased need for accurate and better network monitoring on the other hand, have created a demand for wide area monitoring, protection and control.

Substations for power distribution in high and medium voltage power networks include primary or field devices such as breakers and switches that are controlled in an automated way via a Substation Automation (SA) system. Actuators of the primary devices, such as drives of breakers or switches, execute control signals from control devices. The latter are responsible for the protection of network components, in particular lines, and continuously measure e.g. currents, voltages, temperatures etc. locally and locally disconnect lines or other components when these measurements indicate an emergency, overload or fault condition. Such control and protection devices or terminals with associated measurement and communication units are microprocessor based and commonly referred to as digital relays or Intelligent Electronic Devices (IED). In the context of the present invention, the term protective relay is understood to encompass any IED that performs some kind of monitoring, protection or control functionality, like disturbance recording, over-current protection, differential protection, phase comparison, distance protection or issuing of control signals for primary devices as a result of a protection function.

In conventional line differential protection, the currents entering and leaving the two ends of a protected section of an overhead line or cable are measured by means of current transformers. The respective measured values are compared by an Intelligent Electronic Device (IED) performing a line differential protection function based on current differential algorithms implemented in the IED. The latter ideally provide high sensitivity for internal faults that occur within the protected section, and at the same time have excellent stability for external faults. On the other hand, multi-terminal line differential protection provides for protection of a multitude of partially overlapping sections of the lines of a transmission network. By way of example, three-terminal line differential protection is used e.g. for three terminal lines with single breaker arrangements at all terminals. In general, current samples from current transformers arranged at the end points of the protected sections are exchanged between terminals or IEDs associated with the respective current transformers. Current samples from IEDs located geographically apart from each other must be time coordinated, e.g. via the known echo method of time synchronisation, so that the line differential protection functions can be performed correctly.

In multi-terminal line differential protection, data exchange can be arranged for in a master-master mode between peers, or in a master-slave mode with one appointed master IED, resulting in different requirements for the communication links. Typically, a line data communication module (LDCM) is used for communication between the IEDs, which LDCM module sends data to and receives data from another LDCM module typically up to a few hundred km distant from the former.

A state or condition of an electric power system at one specific point in time can be obtained from a plurality of phasor measurements or snapshots collected across the electric power system or power transmission network. Phasors are time-stamped, complex values such as amplitude and phase, of local electric quantities such as currents, voltages and load flows, and can be provided by means of Phasor Measurement Units (PMU). These units comprise a very accurate time reference, achievable e.g. by using Global Positioning Satellite (GPS) system and allowing synchronization of the time-stamped values from different locations. In an exemplary application for so-called wide-area monitoring, a number of PMUs forward their measured phasor values to a centrally located system protection center or alternatively to a PMU acting as a master. Data exchange can further be established between the system protection centre and other control and protection systems to allow for optimal data sharing and control actions.

The amount of power transmittable through a power network is limited by several factors, in particular a thermal limit and an electrical limit. In order to avoid operation of power lines with overly conservative limits on transmitted power, the patent application EP-A 1324454 proposes a method of determining a thermal or operational limit of a power transmission line with greater precision, enabling to operate the line closer to an actual operational limit. The method comprises determining time-stamped current and voltage phasor information for a first end and a second end of the line, computing an ohmic resistance of the line from the phasor information, and computing an average line temperature from the ohmic resistance. The time-stamped phasor data from the at least two PMUs located throughout the network is received at and exploited by a central data processing device.

Local, bus-oriented approaches of detecting voltage instability use the voltage at a single bus and the current through a single line feeding that bus to estimate a Thévenin equivalent of a potentially complex first section of an electric power system, including transmission and generation facilities. A load impedance of a second section of the network, including consumption facilities fed by said bus, is computed in a straightforward way from the measured voltage and current values, and subsequently compared to the Thévenin equivalent in order to assess the stability of the power system. In the patent application EP-A 1408595, a Voltage Stability Monitoring (VSM) function is disclosed which separates the aforementioned first section in a transmission section or corridor and a predominantly generating section. The latter is connected by the transmission section to a predominantly load-type, second section of the power system. An equivalent impedance, i.e. the parameters of e.g. a T- or II-equivalent circuit of the transmission section, is determined from a single set of voltage and current phasor measurements at each end of the transmission section. A reduced Thévenin equivalent of the predominantly generating section is also obtained, either in an offline study or likewise calculated from phasor measurements. The reduced Thévenin equivalent and the equivalent impedance of the transmission section are combined to yield an improved Thévenin impedance of the first section of the electric power system. Based on this improved Thévenin equivalent, analytical stability analysis can be carried out and various stability indicators can be calculated.

Generally, in electric power systems, electromechanical oscillations with a frequency of less than a few Hz are stable and considered acceptable as long as they decay. On the other hand, unstable oscillations have the potential to cause a system collapse or result in a loss of synchronism, loss of interconnections and ultimately the inability to supply electric power to the customer. The patent US 6'476'521 proposes to use so-called system protection terminals, introduced at suitable locations, e.g. the substations of an electric power system and interconnected by a communication system using preferably a dedicated communication resource. At least two of the terminals are equipped to collect measurement signals or locally available data associated with phasors from that particular location. The measurements are evaluated to detect poorly damped power oscillations in the power system, preferably based on changes in the node or rotor angle differences between the measurement locations.

In the patent US 6'845'333, a protective relay is disclosed that comprises means for producing synchronized voltage or current phasor values as well as means for receiving voltage or current values from another, remote relay via a communication channel. Synchronized phasor measurement data from one of the relays can be reported either as unsolicited binary messages at specific time intervals or solicited ASCII messages at specific times. Hence, current differential protection based on two synchronized phasors from the local and the remote relay at the two ends of a line, cable or interconnection, is proposed.

### DESCRIPTION OF THE INVENTION

It is an objective of the invention to transmit more power through an existing line section of a power transmission network by operating the latter closer to an actual operational limit but without unduly increasing any risk of system instability or network overload. It is a further objective of the invention to create a versatile and at the same time cost-effective protection for a section of a power transmission line as part of an electric power system. These objectives are achieved by an arrangement for and a method of protecting an electric power transmission network according to the claims 1 and 6. Further preferred embodiments are evident from the dependent patent claims.

According to the invention, the power system is protected against large area disturbances by detecting abnormal conditions and incipient instabilities at an early stage. To this end, two or more protection functions that involve synchronized phasor values from two distinct locations along a line are implemented in one and the same system protection facility or module of an Intelligent Electronic Device (IED). Thus, making multiple use of the phasors provides for a supervision of more aspects of the protected line and correspondingly allows protecting against multiple types of fault at the same time. In order for this multiple functionality to remain affordable, a phasor measurement facility and the system protection facility are both integrated in a protective relay. The latter is generally provided for performing local monitoring, protection or control functions for the power system at one of the locations along the line. Hence, in addition to its assigned local protection functions, this protective relay performs the protection functions involving phasor values from both the location of the relay and a remote location, and generates a control command or signal if some threshold is exceeded.

In a preferred variant of the invention, advantage is taken of the fact that the protective relays need not be synchronized over a communication link for mutual data exchange, and that merely time-stamped phasor values are being exchanged in a non-time critical manner. The requirements regarding the quality of the communication link or channel are consequentially reduced, and a packet-based communication network involving TCP/IP protocols can be employed.

In an advantageous embodiment, the phasor values are transmitted via dedicated communication modules and links that may be optimized and operate independently of any SCADA/EMS communication network likewise interconnecting substations of the power system.

### BRIEF DESCRIPTION OF THE DRAWINGS

The subject matter of the invention will be explained in more detail in the following text with reference to preferred exemplary embodiments which are illustrated in the attached drawings, in which:
Fig.1 schematically shows a power system protected by an arrangement of combined protective relays / phasor measurement units according to the invention,
Fig.2 schematically shows a multi terminal arrangement,
Fig.3 schematically shows a power network with a transmission corridor, as well as an equivalent circuit of the power network with a combined model for the generating and transmission sections.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

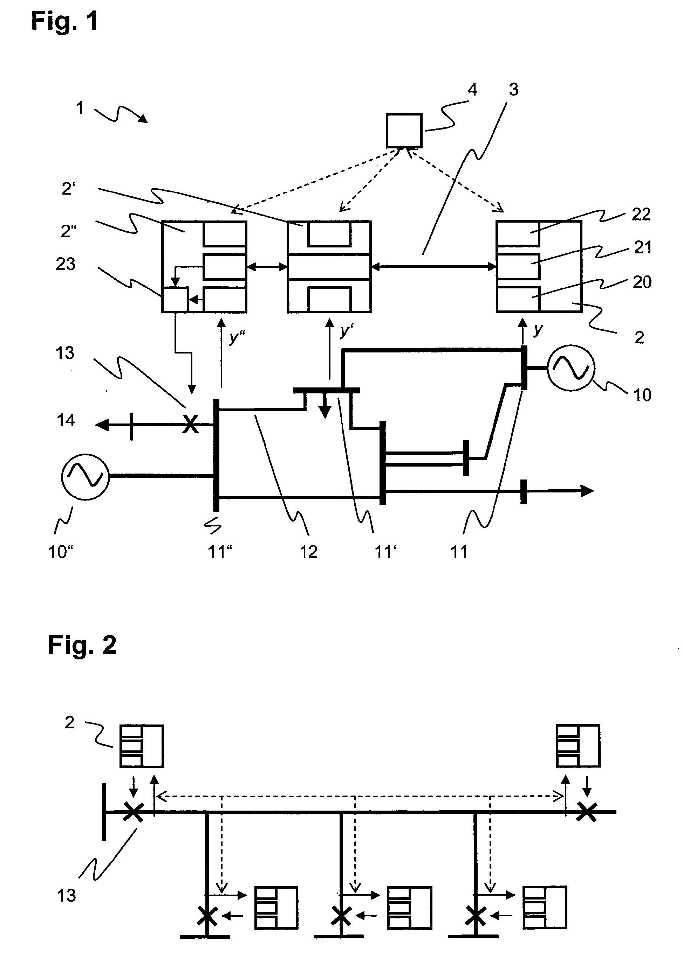

Fig.1 shows an overview of a power system 1 including two generators 10, 10" and several substations represented each by a busbar 11, 11', 11" and interconnected by a number of transmission lines 12. Three protective relays 2, 2', 2" associated to three distinct substations are shown. Exemplary protective relay 2 comprises a phasor measurement facility 20 that provides fast sampled phasor snapshots of the power system in the form of magnitudes or phase angles of system quantities *yᵢ* such as voltages or currents. It further comprises a communication module 21 for exchanging the phasor values measured by the facility 20 with other relays 2', 2" over a communication link 3. Exemplary protective relay 2 also comprises an OPC interface 22 for communicating with other Intelligent Electronic Devices (IED) of a Substation Automation (SA) system over a station bus (not shown in Fig.1), or with a network management centre 4 of a SCADA/EMS or other control and protection system (dotted arrows). It goes without saying that all other protective relays 2', 2" from the different substations, which might be located at a distance of a few hundred km from each other and which are part of the inventive protection arrangement, have the same functionality as the aforementioned exemplary relay 2.

On the station bus level of each SA communication network, communication between IEDs is governed by the substation communication standard IEC 61850 and based on a protocol stack with MMS (Manufacturing Message Specification), TCP/IP (Transmission Control Protocol / Internet Protocol) and the Ethernet protocol and hardware-management routines. The Internet Protocol (IP), which dictates routing information, and the Transmission Control Protocol (TCP), according to which messages are actually broken up into IP packets for transmission, are thus already implemented in the communication functionality of the protective relays. Hence, the exchange of the phasor values between distinct protective relays is preferably realized as a TCP/IP network supporting the TCP/IP protocols as well, either as an intranet proprietary of the power system, e.g. via Power Line Communication (PLC), or including gateways or nodes to the public Internet. In any case, the OPC interface 22 and the communication module 21 may advantageously share the TCP/IP layers of their respective communication stacks.

The protective relays connected to the SA communication network can transmit their respective measured phasor values via their OPC interfaces 22 either to a gateway server likewise connected to the SA communication network, or directly to the network management centre 4 over a SCADA/EMS communication network interconnecting the substations of the power system. On the other hand, communication modules 21 and the communication link 3 provided for exchanging phasor values between distinct protective relays can be dedicated to the plurality of protection functions according to the invention, and operate independently of e.g. the SCADA/EMS communication network mentioned. Hence, as no time-critical data following e.g. a GOOSE protocol has to be transmitted, the properties of the communication link 3 may be optimized for its own purpose.

If the phasor data from disparate sources, often separated by hundreds of kilometres, are analysed in conjunction, they must refer to a common phase reference. Therefore, the different phasor measurement facilities 20 must have local clocks that are synchronised with each other to within a given precision. Such a synchronisation of is preferably achieved with a known time distribution system, for example the global positioning (GPS) system. In a typical embodiment, the phasor data is determined at least every 100 milliseconds, with a temporal resolution of preferably less than 1 millisecond. Each measurement is then associated with a time stamp derived from the synchronised local clock.

Exemplary protective relay 2" comprises a system protection facility 23 for performing the various protection functions that have been implemented there. The transmission line 12, i.e. the section of the network between relay 2" and relay 2' at the neighbouring substation, is protected by a multitude of protection functions that are "hosted" by one of the relays and that are depending on the phasors measured at the location of the relays, i.e. the respective ends of the transmission line 12. In particular, relay 2" activates a circuit breaker 13 if one of the protection functions signals a malfunction or the like and advises to shed some load or to isolate a supervised object (i.e. powerline) from a healthy part of the power system. Protection commands issued by the protective relay 2" reach an actuator of the circuit breaker 13 via a binary output of the relay 2", or alternatively via the OPC interface 22 and the station bus of the substation or the network control centre 4.

It is acknowledged that exemplary embodiments of the various line protection functions listed are known from the documents cited above, which documents are incorporated herein for all purposes by way of reference. Obviously, variants of these protection functions, or different protection applications altogether, can also be integrated in the protective relays as well. Integration in the relay devices is most conveniently realised by a dedicated hardware card that may be added to an off-the-shelf protective relay, and that incorporates the GPS synchronization facility, the communication module 21 and the protection facility 23. The multiple protection functionality comprises two or more of the following:
Line differential protection (LDP) function evaluating synchronized current phasors of the currents entering and leaving the two ends of a protected line, instead of measurements made by means of current transformers as in conventional line differential protection. In particular the multi-terminal line differential protection variant can take full benefit of the communication links established between the protective relays for exchanging phasor values. In Fig.2, a five terminal line is depicted, including five protective relays and their associated breakers, of which only one relay 2 and breaker 13 are referenced. The broken lines indicate the protected zone, and correspond at the same time to the TCP/IP network interconnecting the relays.
Line thermal monitoring (LTM) application takes account of effects such as wind speed and direction, ambient temperature and sun emission, by directly measuring their impact in form of the line resistance, based solely on phasors measured at both ends of the transmission line. In particular, an impedance and shunt admittance of the line are computed, and based on the known properties of the conductor material, the actual average temperature of the line is determined, including an assessment of thermal limits based on measured and design parameters of the line, as well as an assessment of a transmission line loadability.

Phase angle monitoring (PAM) application facilitates the monitoring of network stresses caused by heavily loaded lines. It provides operators with real-time information about voltage phase angle deviations between two locations, which is a decisive factor e.g. for the successful reclosing of transmission lines.

Power Oscillation Monitoring (POM) application detects the frequency, amplitude and damping of the most important oscillation mode in a measured signal by employing e.g. Kalman filtering techniques. Exemplary comparative signals in which oscillations are best observable comprise e.g. a difference or ratio of a voltage magnitude, voltage phase angle, frequency or current magnitude, resulting from two time synchronized phasor measurements taken along a transmission line. Continuous monitoring of oscillations in a power system allows the utilities to safely operate power-carrying components closer to their design limits without jeopardising the stability, security or reliability, and to retune Power System Stabilizers (PSS) in order to damp most important oscillation in due time.

Voltage stability monitoring (VSM) application monitors and potentially displays the PV-Curve, with the actual loading point and the point of maximum loadability for a transmission corridor. It further continuously calculates a power margin, i.e. the amount of additional active power that can be transported on a transmission corridor without jeopardizing voltage stability due to a shortage of reactive power. The measures that can be initiated to improve the stability of the network range from rescheduling the energy generation or the compensation of reactive power, blocking the tap-changers in the load area, or in extreme cases load shedding.

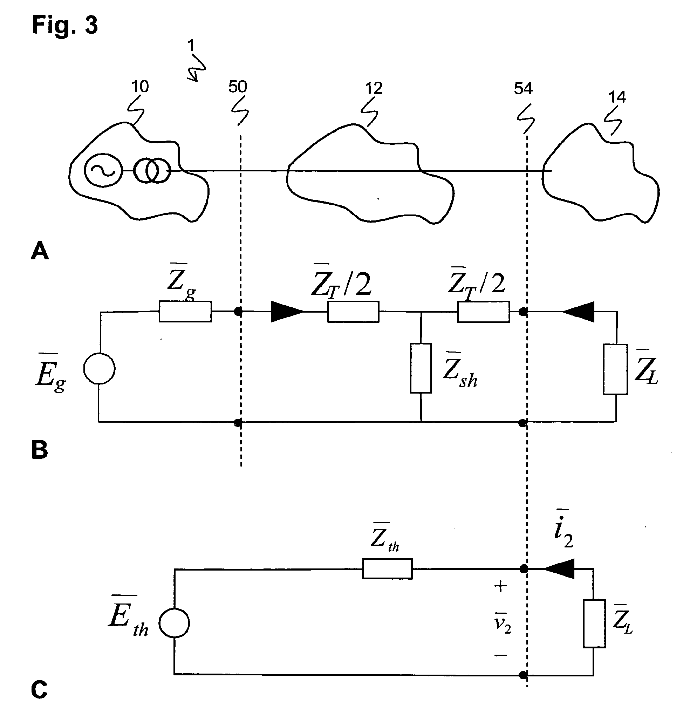

An exemplary and moderately complicated way of voltage stability monitoring is detailed in conjunction with Fig.3. Part A of Fig.3 schematically shows a power network 1 with a transmission line 12 having a first interface 50 to a generating section 10 and a second interface 54 to a load section 14. The transmission line section defined by the two interfaces 50, 54 is also called a transmission corridor. Parameters of an equivalent network or circuit that represents the electrical behaviour of the transmission corridor 12 are determined. In the exemplary embodiment depicted in part B of Fig.3, this equivalent is a T-equivalent network comprising a transmission impedance Z̅_{T} and a shunt impedance Z̅ₛₕ. In another preferred embodiment, the equivalent is a Π-equivalent. In either case, the generating section 10 is modelled separately from the transmission section 12 and represented by a reduced Thévenin equivalent E̅_{g},Z̅_{g}. Part C of Fig.3c finally shows the improved Thévenin equivalent E̅ₜₕ,Z̅ₜₕ of a first section of the electric power system 1 including transmission 12 and generation 10 facilities. A load impedance Z̅_{L} of a second section of the network, including consumption facilities 14 fed via interface 54, is computed in a straightforward way from the measured voltage and current values, and subsequently compared to the improved Thévenin equivalent in order to assess the stability of the power system.

### LIST OF DESIGNATIONS

- 1: power system
- 10: generator, generating section
- 11: busbar
- 12: transmission line
- 13: switch
- 14: load, load section
- 2: protective relay
- 20: phasor measurement facilty
- 21: communication module
- 22: OPC interface
- 23: line protection facility
- 3: communication link
- 4: network management centre
- 50, 54: network section interface

## Claims

1. An arrangement for protecting an electric power system (1), comprising protective relays (2, 2', 2") for monitoring, protecting or controlling the power system (1) and comprising each
- a phasor measurement facility (20) for measuring synchronized current and/or voltage phasor values at a location (11, 11', 11") of the respective protective relay (2, 2', 2"),
- means (21, 22) for transmitting and/or receiving measured phasor values to and/or from other protective relays,
**characterized in that** the arrangement comprises a system protection facility (23) for performing a plurality of protection functions based on synchronized phasor values measured at the locations (11", 11') of two distinct protective relays (2", 2'), and **in that** the system protection facility (23) is integrated in one of the protective relays (2, 2',2").

2. The arrangement according to claim 1, **characterized in that** the plurality of protection functions comprises two or more of
- a line differential protection function, comprising comparing the current phasor values measured at two distinct locations (11", 11') along a line (12),
- a line thermal monitoring protection function, comprising computing, from the current and voltage phasor values measured at two distinct locations (11", 11') along a line (12), an ohmic resistance of the line (12), and computing an average line temperature from the ohmic resistance,
- a phase angle monitoring protection function, comprising comparing two phase angle values measured at two distinct locations (11", 11') along a line (12),
- a power oscillation protection function, comprising computing a comparative signal from two signals measured at two distinct locations (11", 11') along a line (12), and identifying frequency, amplitude and damping of the most important oscillation mode in the comparative signal,
- a voltage stability monitoring protection function, comprising computing, from the current and voltage phasor values measured at two distinct locations (11", 11') along a line (12), an impedance equivalent value (Z̅_{T},Z̅ₛₕ,) of an impedance of an equivalent circuit representing the line (12), and determining therefrom an improved Thévenin equivalent (E̅ₜₕ,Z̅ₜₕ) of a first section of the power system (1) comprising the line (12) and an adjacent generating section (10).

3. The arrangement according to claim 2, **characterized in that** it comprises at least three protective relays (2, 2', 2"), and **in that** the at least three protective relays (2, 2', 2") are forming a multi-terminal line differential arrangement with the current samples being synchronized phasor values measured at the respective locations (11, 11', 11") of the at least three protective relays (2, 2', 2").

4. The arrangement according to claim 1, **characterized in that** the means (21, 22) for transmitting and/or receiving measured phasor values are connected to a packet-based TCP/IP communication network.

5. The arrangement according to claim 1 or 4, wherein the means (21, 22) for transmitting and/or receiving measured phasor values comprise a data communication module (21) connected to a communication link (3), **characterized in that** the data communication module (21) and the communication link (3) are dedicated to the transmission of said synchronized phasor values for said plurality of protection functions.

6. A method of protecting an electric power system (1), wherein two protective relays (2", 2') are arranged at two distinct locations (11", 11') along a line (12) of the electric power system (1), comprising
- measuring synchronized current and/or voltage phasor values by the two protective relays (2", 2') at the respective locations (11", 11') of the protective relays (2", 2'),
- transmitting the measured values from a transmitting relay to a receiving relay, and
- performing, by the receiving relay, a plurality of protection functions based on the synchronized phasor values from both protective relays (2", 2').

7. The method according to claim 6, **characterized in that** the measured phasor values are transmitted over a packet-based TCP/IP communication network, and/or a dedicated communication link (3).

8. A computer program for protecting an electric power transmission network, which is loadable into an internal memory of a digital computer, comprising computer program code means to make, when said program is loaded in said internal memory, the computer execute the method for protecting an electric power transmission network according to claim 6 or 7.
